# EUROPÄISCHE PATENTSCHRIFT

(11) **EP 1 850 711 B1**
(45) Veröffentlichungstag und Bekanntmachung des Hinweises auf die Patenterteilung: **03.09.2014**
(21) Anmeldenummer: 06707921.0
(22) Anmeldetag: 31.01.2006
(51) Int. Cl.: A47J 27/21

(54) **ELEKTRISCHER WASSERKOCHER**
ELECTRIC KETTLE
BOUILLOIRE ELECTRIQUE

(30) Priorität: 11.02.2005 DE 102005006351
(43) Veröffentlichungstag der Anmeldung: 07.11.2007
(73) Patentinhaber: BSH Bosch und Siemens Hausgeräte GmbH, 81739 München (DE)
(72) Erfinder: HUBER, Michael, A-6341 Ebbs (AT); MATHES, Anton, 83364 Neukirchen (DE)
(86) Internationale Anmeldenummer: PCT/EP2006/050552
(87) Internationale Veröffentlichungsnummer: WO 2006/084803

(56) Entgegenhaltungen:
- WO-A-01/62129
- DE-A1- 10 006 248
- DE-A1- 10 123 528
- GB-A- 2 397 214

## Beschreibung

Die Erfindung betrifft einen elektrischen Wasserkocher mit einem Wasserbehälter und einem den Wasserbehälter umhüllenden Mantel. Ein Beispiel ist dem Dokument DE 100 06 248 A1 zu entnehmen.

Derartige bekannte Wasserkocher umfassen einen Wasserbehälter aus Kunststoff, der von einem rohrförmigen Mantel aus Aluminium oder Edelstahl umgeben ist. Im Betrieb des Wasserkochers kann sich der Wasserbehälter wegen des mit dem Wasserkocher erhitzten Wassers ausdehnen und sich der Wasserbehälter und der Mantel gegenseitig verspannen.

Aufgabe der vorliegenden Erfindung ist es daher, einen Wasserkocher der eingangs genannten Art derart auszuführen, dass sich die durch die Erwärmung des Wasserbehälters bedingte Ausdehnung des Wasserbehälters weniger störend auswirkt.

Die Aufgabe wird gelöst durch einen elektrischen Wasserkocher, aufweisend einen Wasserbehälter und einen den Wasserbehälter umhüllenden Mantel mit einer unteren Öffnung, dadurch gekennzeichnet, dass der Wasserbehälter an seinem unteren Bereich gegenüber dem Mantel bezüglich der Längsachse des Wasserbehälters verschieblich gelagert ist. Durch diese Art der Lagerung kann sich der Wasserbehälter ausdehnen, ohne sich mit dem Mantel zu verspannen.

Bevorzugt wird der Wasserbehälter mit wenigstens einem Federelement verschieblich gelagert und insbesondere ist das Federelement derart vorgespannt, dass es den unteren Bereich des Wasserbehälters und den unteren Bereich des Mantels gegeneinander zieht, so dass der Mantel und der Wasserbehälter in ihren unteren Bereichen gegeneinander verspannt sind. Durch diese Montageart wird nicht nur ein Ausdehnen des Wasserbehälters aufgrund des heißen Wassers ausgeglichen, sondern der Mantel ist auch relativ gut am Wasserbehälter befestigt.

Der Mantel kann entweder direkt mit dem Wasserbehälter über das Federelement verschieblich gelagert sein oder nach einer bevorzugten Variante des erfindungsgemäßen elektrischen Wasserkochers kann dieser ein auf dem Rand der unteren Öffnung des Mantels anliegendes Befestigungsmittel umfassen, über das das wenigstens eine Federelement den unteren Bereich des Mantels an den unteren Bereich des Wasserbehälters zieht. Das Befestigungsmittel ist beispielsweise ringförmig ausgebildet.

Das Federelement ist bevorzugt eine Blattfeder, die insbesondere T-förmig ausgebildet ist und einen Federbügel und eine Federzunge umfasst. Der Wasserkocher ist dann bevorzugt derart ausgeführt, dass der Federbügel mit einer Aussparung des Befestigungsmittels und/oder die Federzunge mit einem am Wasserbehälter angeformten Ring zusammenwirkt.

Da sich so genannte schnurlose Wasserkocher großer Beliebtheit erfreuen, umfasst der Wasserkocher gemäß einer Variante eine elektrische Steckkupplung und einen Sockel, über den eine Heizung des elektrischen Wasserkochers im Betrieb mit elektrischer Energie versogt wird und eine den Wasserbehälter und den ihn umhüllenden Mantel umfassende Kanne von dem Sockel abgenommen werden kann.

Um die untere Öffnung des Mantels abzudecken, umfasst eine Ausführungsform des erfindungsgemäßen Wasserkochers eine Blende, die die untere Öffnung des Mantels abdeckt und die fest mit dem Wasserbehälter verbunden ist, so dass die Kanne mit der Blende im Betrieb des Wasserkochers auf dem Sockel sitzt. Dadurch ist es möglich, dass die Kanne nicht mit dem Mantel auf dem Sockel sitzt und somit der Mantel von dem Sockel entkoppelt ist. Bei einer durch das heiße Wasser bedingten Ausdehnung des Wasserbehälters sitzt folglich die Kanne über der fest mit dem Wasserbehälter verbundenen Blende auf dem Sockel, so dass ein guter elektrischer Kontakt der elektrischen Steckkupplung auch bei sich ausdehnendem Wasserbehälter gewährleistet ist.

Damit der Mantel den Wasserbehälter im unteren Bereich stets überdeckt, ist der Mantel bevorzugt so weit nach unten über den Wasserbehälter gezogen, dass er den Wasserbehälter auch im durch das erhitzte Wasser verursachten ausgedehnten Zustand überdeckt.

Damit der Wasserbehälter auch im ausgedehnten Zustand möglichst nicht über den oberen Rand des Mantels übersteht, ist der Wasserbehälter bevorzugt an seinem oberen Bereich mit dem oberen Bereich des Mantels insbesondere mit wenigstens einem weiteren Bauteil fest gelagert.

Nach einer Ausführungsform ist der Mantel in seinem oberen Bereich konisch ausgeführt.

Ist an dem Wasserbehälter eine Schnaupe zum Ausgießen von Wasser angeformt und weist der Mantel in dem konischen Bereich eine der Schnaupe entsprechende Aussparung auf, so kann der Mantel im oberen Bereich insbesondere dann besonders gut an den Wasserbehälter befestigt werden, wenn das wenigstens eine Bauteil, mit dem der Wasserbehälter in seinem oberen Bereich am oberen Bereich des Mantels fest gelagert ist, eine Schnaupenblende ist.

Für eine leichte Montage ist es vorgesehen, dass ein Griff des Wasserkochers mit dem Wasserbehälter verrastet ist. Weist zudem der Mantel in seinem konischen Bereich eine dem Griff entsprechende Aussparung auf und drückt der Griff gegen den Rand der für den Griff vorgesehenen Aussparung des Mantels, so ergibt sich ebenfalls eine gute feste Lagerung.

Wenn der Rand der oberen Öffnung des Wasserbehälters und der Rand der oberen Öffnung des Mantels eine Spalt bilden, dann ist es vorteilhaft, wenn das wenigstens eine Bauteil, mit dem der Wasserbehälter in seinem oberen Bereich am oberen Bereich des Mantels fest gelagert ist, eine Blende ist, die diesen Spalt abdeckt.

Ein Ausführungsbeispiel eines erfindungsgemäßen Wasserkochers und dessen Montage wird exemplarisch anhand der folgenden schematischen Figuren erläutert. Es zeigen:
- Figuren 1 bis 9: einen Wasserkocher in unterschiedlichen Stadien seiner Montage und
- Figur 10: eine Seitenansicht des Wasserkoches in geschnittener Darstellung.

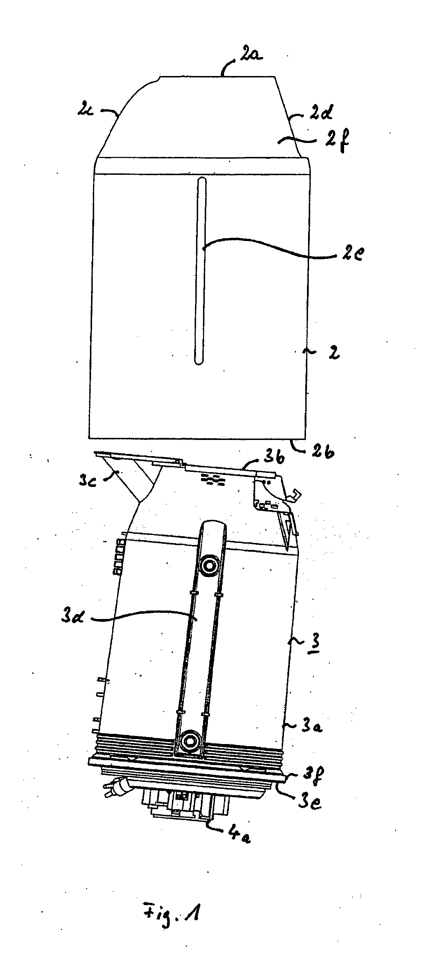

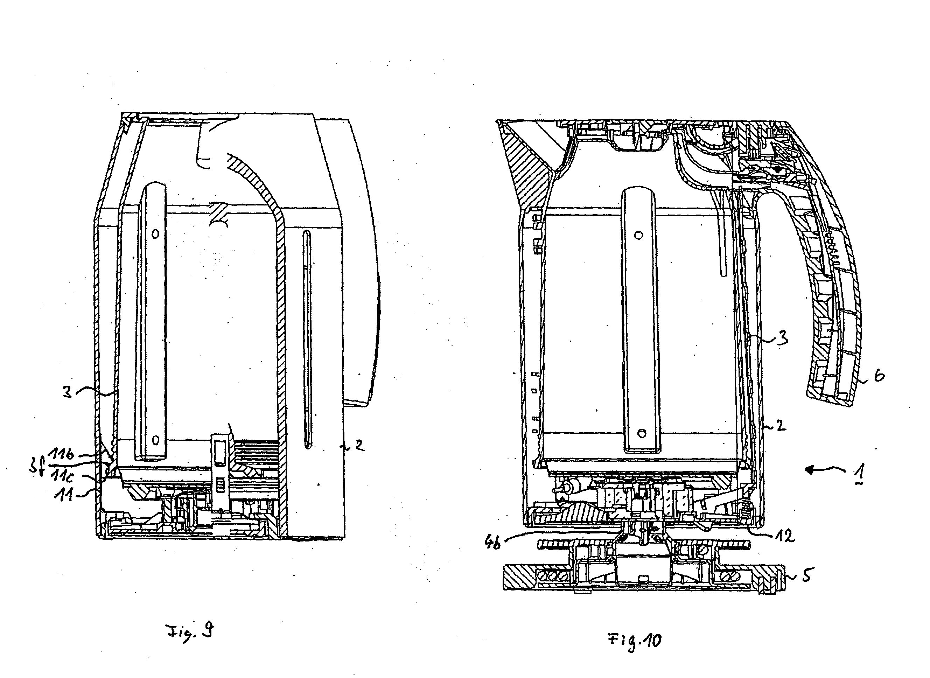

Die Figuren 1 bis 10 zeigen einen erfindungsgemäßen Wasserkocher 1. Mit den Figuren 1 bis 9 wird die Montage des Wasserkochers 1 verdeutlicht und die Figur 10 zeigt den fertig montierten Wasserkocher 1 in geschnittener Darstellung.

Im Falle des vorliegenden Ausführungsbeispiels umfasst der Wasserkocher 1 einen zylinderförmigen und im oberen Bereich konisch ausgebildeten Mantel 2 aus gebürstetem Aluminium und einen Wasserbehälter 3 aus Kunststoff. Der Wasserbehälter 3 umfasst einen im Wesentlichen zylinderförmigen Hohlkörper 3a aus Kunststoff mit einer oberen Öffnung 3b, über die der fertig montierte Wasserkocher 1 mit Wasser befüllt werden kann. Der Hohlkörper 3a umfasst ferner eine an den Hohlkörper 3a angeformte Schnaupe 3c zum Ausgießen von Wasser und es ist an dem Hohlkörper 3a eine Wasserstandsanzeige 3d angeordnet. An seinem unteren Ende ist der Hohlkörper 3a mit einer zur Erwärmung des Wassers vorgesehenen kreisförmigen flächenhaften Heizung 3e abgeschlossen. Die Heizung 3e, die somit den Boden des Wasserbehälters 3 bildet, wird im Falle des vorliegenden Ausführungsbeispiels im Betrieb mittels einer allgemein bekannten Steckkupplung und einem Sockel 5 mit elektrischer Energie versorgt. Die Steckkupplung umfasst zwei gegenseitig kontaktierbare Teilkupplungen 4a und 4b, von denen die Teilkupplung 4a an der Heizung 3e und die Teilkupplung 4b in dem Sockel 5 befestigt ist. Im Falle des vorliegenden Ausführungsbeispiels handelt es sich also um einen kabellosen Wasserkocher 1.

Der Mantel 2 umfasst eine obere Öffnungen 2a und eine kreisförmige untere Öffnung 2b. Die obere Öffnung 2a ist zumindest teilweise kreisförmig und umfasst an die Schnaupe 3b und einen Griff 6 angepasste Aussparungen 2c und 2d, sowie eine an die Wasserstandsanzeige 3d angepasste Aussparung 2e. Des Weiteren läuft der Mantel 2 in einem oberen Abschnitt 2f derart stark konisch zu, dass der Querschnitt der oberen Öffnung 2a deutlich kleiner als die Fläche der Heizung 3e ist. Die obere Öffnung 2a des Mantels 2 ist also deutlich kleiner als der Boden des Wasserbehälters 3.

Für die Montage des Wasserkochers 1 wird zunächst der Wasserbehälter 3 von unten in den Mantel 2 geschoben oder der Mantel 2 über den Wasserbehälter 3 gestülpt, so dass die Schnaupe 3c des Wasserbehälters 3 sich oberhalb der oberen Öffnung 2a des Mantels 2 befindet.

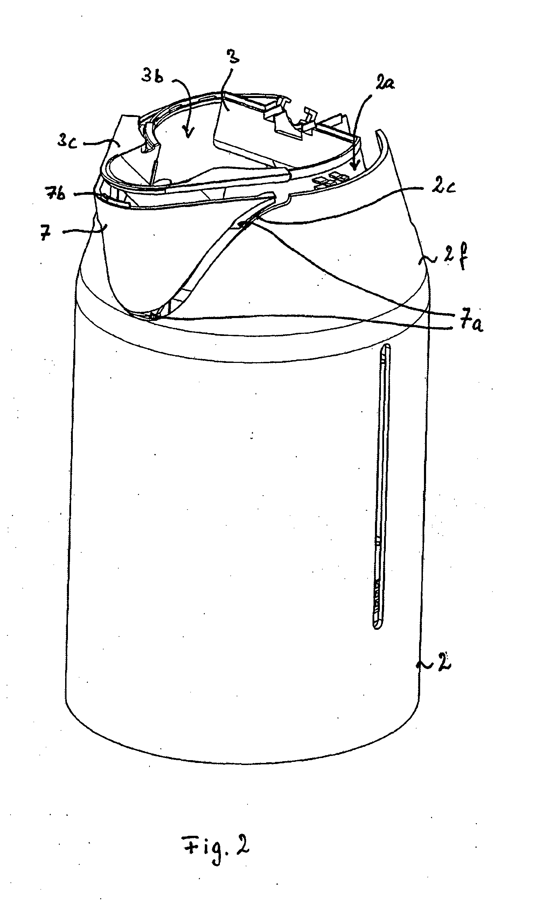

Anschließend wird im Bereich der Schnaupe 3c der Wasserbehälter 3 mit einem an die Schnaupe 3c und der Aussparung 2c der oberen Öffnung 2a des Mantels 2 angepassten Schnaupenblende 7 aus Kunststoff fixiert, wie dies in der Fig. 2 dargestellt ist. Die Schnaupenblende 7 umfasst an die Schnaupenblende 7 angeformte Rastzungen 7a, die den Mantel 2 an dessen Innenseite im Bereich der Aussparung 2c hintergreifen und die derart ausgeführt sind, dass im montiertem Zustand des Wasserkochers 1 die Außenflächen der Schnaupenblende 7 und des Mantels 2 möglichst spaltfrei und bündig abschließen. Die Schnaupenblende 7 umfasst ferner ein an die Schnaupenblende 7 angeformtes Rastelement 7b, das im montiertem Zustand des Wasserkochers 1 in ein an der Schnaupe 3c des Wasserbehälters 4 angeformtes Gegenrastelement eingerastet ist.

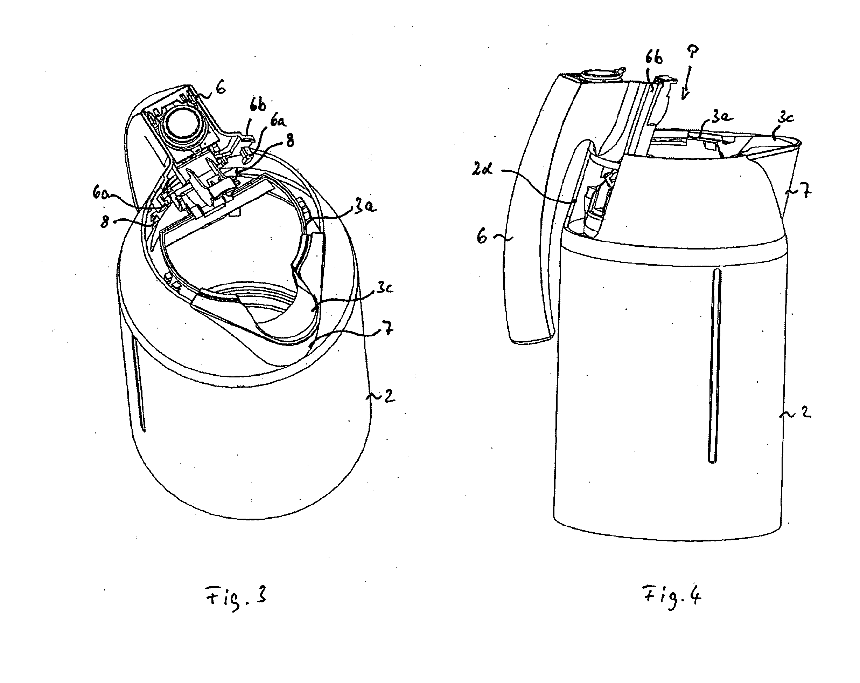

Anschließend wird der Griff 6 montiert, was in den Figuren 3 und 4 gezeigt ist. Wie es in der Fig. 3 zu sehen ist, umfasst der Hohlkörper 3a des Wasserbehälters 3 im oberen Bereich gegenüber der Schnaupe 3c zwei an den Hohlkörper 3a angeformte Kerben 8. Der Griff 6, der aus Kunststoff gefertigt ist, umfasst den Kerben 8 des Hohlkörpers 3a entsprechende und an den Griff 6 angeformte Führungsschienen 6a. Für die Montage des Griffs 6 werden die Führungsschienen 6a des Griffs 6 von oben in Richtung des Pfeils P (vgl. Fig. 4) in die Kerben 8 des Hohlkörpers 8 geschoben, bis der Griff 6 und der Hohlkörper 3a in einer vorgegebenen Stellung miteinender verrasten. Der Griff 6 ist somit mit dem Hohlkörper 3a des Wasserbehälters 3 fest verbunden.

Der Griff 6 umfasst ferner eine an den Griff 6 angeformte Aussparung 6b, die im Bereich der Aussparung 2d des Mantels 2 diesen im zusammengebautem Zustand des Wasserkochers 1 hintergreift. Die Aussparung 6b des Griffs 6 ist ferner derart ausgebildet, dass der Griff 6 und der Mantel 2 möglichst spaltfrei und bündig abschließen. Außerdem drückt der Hohlkörper 3a den Griff 6 im Bereich seiner Aussparung 6b im montiertem Zustand des Wasserkochers 1 gegen den Mantel 2, wodurch der Wasserbehälter 3 über den Griff 6 mit dem Mantel 2 verspannt ist.

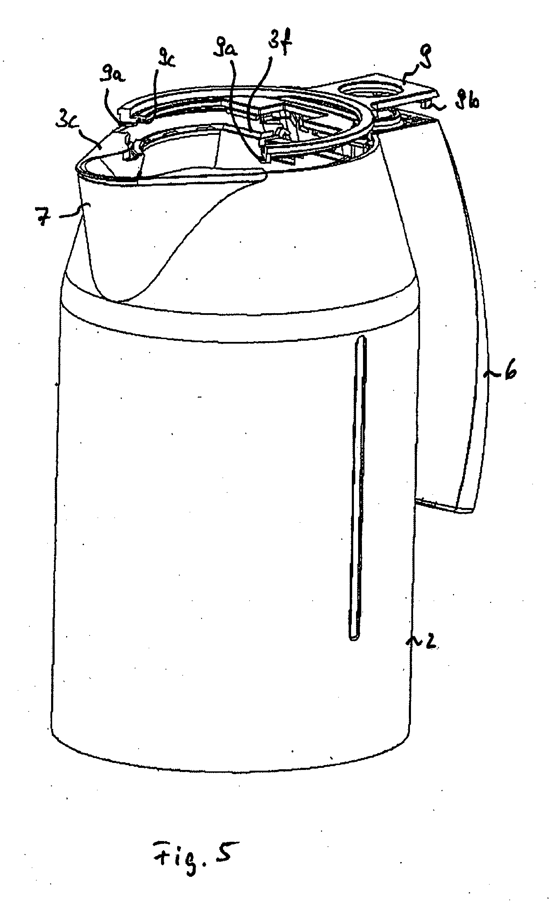

Um den Mantel 2 verbessert an dessen oberem Bereich mit dem Wasserbehälter 3 fest zu lagern, wird im Falle des vorliegenden Ausführungsbeispiels anschließend ein in der Fig. 5 näher dargestellte teilringförmige Blende 9 aus Kunststoff zwischen der oberen Öffnung 2a des Mantels 2 und der oberen Öffnung 3b des Hohlkörpers 3a des Wasserbehälters 3 gedrückt. Die Blende 9 umfasst angeformte Rastelemente 9a, die unterhalb der Schnaupe 3c des Wasserbehälters 3 eingreifen und angeformte Rastelemente 9b, die mit dem Griff 6 verrasten. Die Blende 9 umfasst ferner eine Nut 9c, die mit der die obere Öffnung 3b des Wasserbehälters 3 abschließenden Kante 3f im montiertem Zustand des Wasserkochers 1 verrastet. Dadurch ist die Blende 9 an dem Wasserbehälter 3 befestigt.

Die Blende 9 ist ferner derart ausgeführt, dass sie im zusammengebautem Zustand des Wasserkochers 1 von innen gegen den Rand der oberen Öffnung 2a des Mantels 2 drückt, wodurch der Mantel 2 und der Wasserbehälter 3 in ihren oberen Bereichen miteinander verspannt sind und daher der Wasserbehälter 3 am Mantel 2 im oberen Bereich befestigt ist. Außerdem ist die Blende 9 derart ausgebildet, dass sie den Spalt zwischen der Kante 3f der oberen Öffnung 3a des Wasserbehälters 3 und dem Rand der oberen Öffnung 2a des Mantels 2 abdeckt.

Im Falle des vorliegenden Ausführungsbeispiels wird anschließend der Mantel 2 in seinem unteren Bereich über einen aus Kunststoff gefertigten Ring 10 und vier aus Blech gefertigte T-förmige Blattfedern 11 im unteren Bereich des Wasserbehälters 3 verspannt. Jede der vier Blattfedern 11 umfasst einen Federbügel 11a, eine Federzunge 11b und eine Anschlagfläche 11 c.

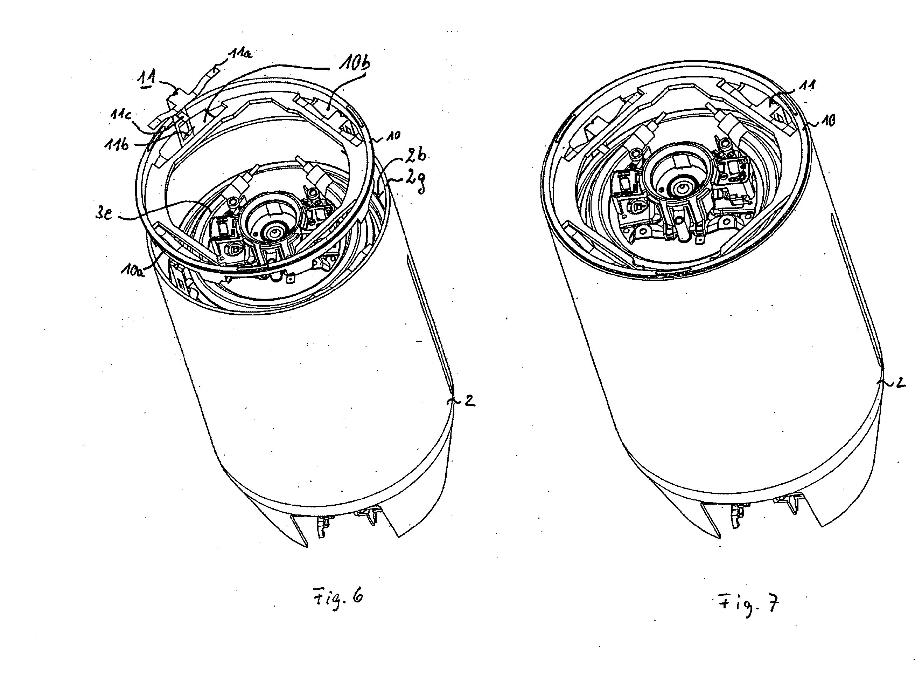

Für diesen Teil der Montage des Wasserkochers 1, der in den Figuren 6 und 7 verdeutlicht ist, wird zunächst der Ring 10 auf den Rand 2g der unteren Öffnung 2b des Mantels 2 gelegt. Der Ring 10 hat eine umlaufende Kante 10a, mit der sich der Ring 10 auf dem Rand 2g abstützt. Der Ring 10 umfasst außerdem vier Aussparungen 10b, durch die anschließend jeweils eine der Blattfeder 11 geführt wird. Die einzelnen Blattfedern 11 werden derart durch die Aussparungen 10b geführt, dass sich die Federbügel 11a am Ring 10 abstützen. Die einzelnen Blattfedern 11 werden so weit entlang der Innenfläche des Mantels 2 geschoben, bis die Federzungen 11 b über einen, an dem Hohlkörper 3a angeformten, in den Figuren 3 und 9 dargestellten Ring 3f geschoben werden und hinter dem Ring 3f verschnappen. Die Anschlagflächen 11c verhindern, dass die Blattfedern 11 zu weit in den entlang der Innenfläche des Mantels 2 geschoben werden. Die Blattfedern 11 sind ferner derart dimensioniert, dass die Federbügel 11 b beim montiertem Wasserkocher 1 vorgespannt sind. Dadurch wird der Ring 10 und der Wasserbehälter 3 aneinander gedrückt. Da der Ring 10 wiederum auf dem Rand 2g des Mantels 2 aufliegt, wird der untere Bereich des Wasserbehälters 3 gegen den Rand 2g der unteren Öffnung 2b des Mantels 2 gezogen.

Dehnt sich nun im Betrieb des Wasserkochers 1 der Hohlkörper 3a des Wasserbehälters 3 aufgrund des erwärmten Wassers aus, so kann sich der Hohlkörper 3a nur längs seiner Längsachse nach unten ausdehnen, da der Wasserbehälter 3 am oberen Ende am Mantel 2 fest und am unteren Ende mittels der Blattfedern 11 verschieblich gelagert ist. Da zudem der Wasserbehälter 3 mittels der Blattfedern 11 im untern Bereich mit dem Mantel 2 verspannt ist, ergibt sich außerdem eine relativ gute Befestigung des Mantels 2 am Wasserbehälter 3, obwohl sich der Hohlkörper 3a des Wasserbehälters 3 aufgrund der Erwärmung nach unten ausdehnt. Ferner ist im Falle des vorliegenden Ausführungsbeispiels der Mantel 2 derart weit nach unten gezogen, dass er unabhängig von der durch die Erwärmung des Wassers bedingten Ausdehnung den Wasserbehälter 3 überdeckt.

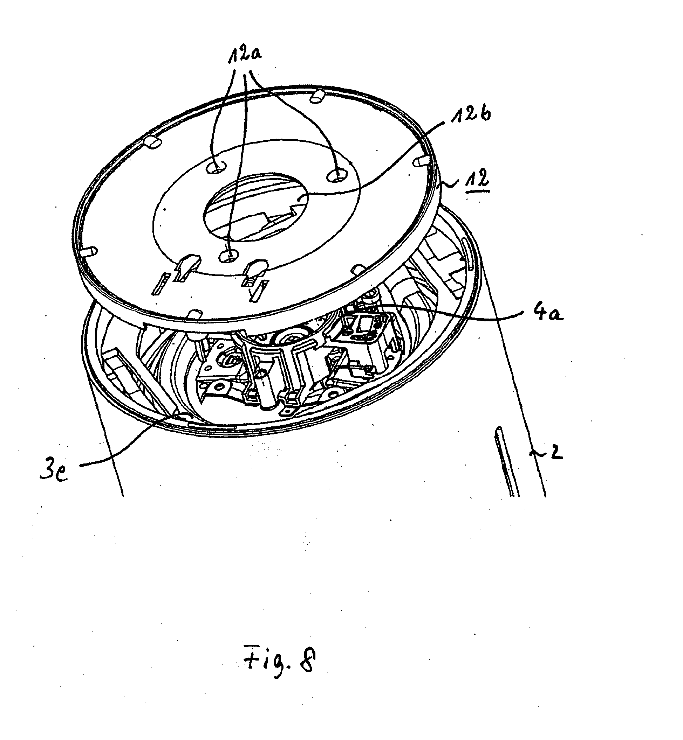

Um die untere Öffnung 2b des Mantels 2 zu verschließen, wird, wie in der Fig. 8 dargestellt, anschließend die Öffnung mit einer kreisförmigen Blende 12 aus Kunststoff abgedeckt. Die kreisförmige Blende 12 wird mit drei in der Fig. 8 nicht dargestellten Schrauben mit der Heizung 3e verbundenen Teilkupplung 4a verschraubt. Die für die Schrauben vorgesehenen Löcher sind mit dem Bezugszeichen 12a versehen. Wie es der Fig. 8 zu entnehmen ist, umfasst die kreisförmige Blende 12 eine runde Öffnung 12b, durch die die mit der Heizung 3e verbundene Teilkupplung 4a kontaktierbar ist.

Im Betrieb des fertig montierten Wasserkochers 1 sitzt der Wasserbehälter 3 mit montiertem Mantel 2 mit der kreisförmigen Blende 12 auf dem Sockel 5 und die Teilkupplung 4a kontaktiert die Teilkupplung 4b elektrisch, so dass die Heizung 3e des Wasserkochers 1 im Betrieb über die Steckkupplung mit elektrischer Energie versorgt wird. In der Fig. 9 ist der Wasserbehälter 3 mit montiertem Mantel 2 leicht abgesetzt zum Sockel 5 dargestellt. Die kreisförmige Blende 12 ist über die Teilkupplung 4a direkt mit dem Wasserbehälter 3 des Wasserkochers 1 verbunden. Folglich sitzt im Betrieb des Wasserkochers 1 nicht der Mantel 2, sondern der Wasserbehälter 3 über die Teilkupplung 4a und der kreisförmigen Blende 12 auf dem Sockel 5.

## Patentansprüche

1. Elektrischer Wasserkocher, aufweisend einen Wasserbehälter (3) und einen den Wasserbehälter (3) umhüllenden Mantel (2) mit einer unteren Öffnung (2b), **dadurch gekennzeichnet, dass** der Wasserbehälter (3) an seinem unteren Bereich (3f) gegenüber dem Mantel (2) bezüglich der Längsachse des Wasserbehälters (3) verschieblich gelagert ist.

2. Elektrischer Wasserkocher nach Anspruch 1, **dadurch gekennzeichnet, dass** der Wasserbehälter mit wenigstens einem Federelement (11) verschieblich gelagert ist.

3. Elektrischer Wasserkocher nach Anspruch 2, **dadurch gekennzeichnet, dass** das wenigstens eine Federelement (11) derart vorgespannt ist, dass es den unteren Bereich (3f) des Wasserbehälters (3) und den unteren Bereich (2g) des Mantels (2) gegeneinander zieht.

4. Elektrischer Wasserkocher nach Anspruch 3, **dadurch gekennzeichnet, dass** der Wasserkocher (1) ein auf dem Rand (2g) der unteren Öffnung (2b) des Mantels (2) anliegendes Befestigungsmittel (10) umfasst, über das das wenigstens eine Federelement (11) den unteren Bereich (2g) des Mantels (2) an den unteren Bereich (3f) des Wasserbehälters (3) zieht.

5. Elektrischer Wasserkocher nach Anspruch 4, **dadurch gekennzeichnet, dass** das Befestigungsmittel (10) ringförmig ausgebildet ist.

6. Elektrischer Wasserkocher nach einem der Ansprüche 3 bis 5, **dadurch gekennzeichnet, dass** das wenigstens eine Federelement eine Blattfeder (11) ist.

7. Elektrischer Wasserkocher nach Anspruch 6, **dadurch gekennzeichnet, dass** die Blattfeder (11) T-förmig ausgebildet ist und einen Federbügel (11a) und eine Federzunge (11 b) umfasst.

8. Elektrischer Wasserkocher nach Anspruch 7, **dadurch gekennzeichnet, dass** der Federbügel (11b) mit einer Aussparung (10b) des Befestigungsmittels (10) zusammenwirkt.

9. Elektrischer Wasserkocher nach einem der Ansprüche 7 bis 9, dass die Federzunge (11b) der Blattfeder (11) mit einem am Wasserbehälter (3) angeformten Ring (3f) zusammenwirkt.

10. Elektrischer Wasserkocher nach einem der Ansprüche 1 bis 9, **dadurch gekennzeichnet, dass** der elektrische Wasserkocher (1) eine elektrische Steckkupplung (4a, 4b) und einen Sockel (5) umfasst, über den eine Heizung (3e) des elektrischen Wasserkochers (1) im Betrieb mit elektrischer Energie versogt wird und eine den Wasserbehälter (3) und den ihn umhüllenden Mantel (2) umfassende Kanne von dem Sockel abgenommen werden kann.

11. Elektrischer Wasserkocher nach Anspruch 10, **dadurch gekennzeichnet, dass** eine Blende (12) die untere Öffnung (2b) des Mantels (2) abgedeckt, die Blende (12) fest mit dem Wasserbehälter (3) verbunden ist und die Kanne mit der Blende (12) im Betrieb des Wasserkochers (1) auf dem Sockel (5) sitzt.

12. Elektrischer Wasserkocher nach einem der Ansprüche 1 bis 11, **dadurch gekennzeichnet, dass** der Mantel (2) im unteren Bereich so weit nach unten über den Wasserbehälter (3) gezogen ist, dass er den Wasserbehälter (3) auch im durch das erhitzte Wasser verursachten ausgedehnten Zustand überdeckt.

13. Elektrischer Wasserkocher nach einem der Ansprüche 1 bis 12, **dadurch gekennzeichnet, dass** der Wasserbehälter (3) an seinem oberen Bereich (3c) mit dem oberen Bereich (2f) des Mantels (2) fest gelagert ist.

14. Elektrischer Wasserkocher nach Anspruch 13, **dadurch gekennzeichnet, dass** der Wasserbehälter (3) in seinem oberen Bereich mit wenigstens einem weiteren Bauteil (6, 7, 9) an dem oberen Bereich (2f) des Mantels (2) fest gelagert ist.

15. Elektrischer Wasserkocher nach einem der Ansprüche 1 bis 14, **dadurch gekennzeichnet, dass** der Mantel (2) in seinem oberen Bereich (2f) konisch ausgeführt ist.

16. Elektrischer Wasserkocher nach Anspruch 15, **dadurch gekennzeichnet, dass** an dem Wasserbehälter (3) eine Schnaupe (3c) zum Ausgießen von Wasser angeformt ist und der Mantel (2) in dem konischen Bereich (2f) eine der Schnaupe (2c) entsprechenden Aussparung (2c) aufweist.

17. Elektrischer Wasserkocher nach einem der Ansprüche 15 bis 17, **dadurch gekennzeichnet, dass** das wenigstens eine Bauteil, mit dem der Wasserbehälter (3) in seinem oberen Bereich am oberen Bereich (2f) des Mantels (2) fest gelagert ist, eine Schnaupenblende (7) ist.

18. Elektrischer Wasserkocher nach einem der Ansprüche 1 bis 17, **dadurch gekennzeichnet, dass** der Wasserkocher (1) eine Griff (6) umfasst, der mit dem Wasserbehälter (3) verrastet ist.

19. Elektrischer Wasserkocher nach Anspruch 18, **dadurch gekennzeichnet, dass** der Mantel (2) in seinem konischen Bereich (2f) eine dem Griff (6) entsprechende Aussparung (2d) aufweist.

20. Elektrischer Wasserkocher nach Anspruch 19, **dadurch gekennzeichnet, dass** der Griff (6) gegen den Rand der für den Griff (6) vorgesehene Aussparung (2d) des Mantels (2) drückt.

21. Elektrischer Wasserkocher nach einem der Ansprüche 14 bis 20, **dadurch gekennzeichnet, dass** das wenigstens eine Bauteil, mit dem der Wasserbehälter (3) in seinem oberen Bereich am oberen Bereich (2f) des Mantels (2) fest gelagert ist, eine Blende (9) ist, die einen Spalt, der von dem Rand (3f) der oberen Öffnung (3b) des Wasserbehälters (3) und dem Rand der oberen Öffnung (2a) des Mantels (2) begrenzt wird, abdeckt.

## Claims

1. Electric kettle, having a water container (3) and a jacket (2) surrounding the water container (3), with an opening (2b) at the bottom, **characterised in that** the water container (3) is supported in its lower area (3f) with respect to the jacket (2) to allow movement in relation to the longitudinal axis of the water container (3).

2. Electric kettle according to claim 1, **characterised in that** the water container supported is to allow movement by with at least one spring element (11).

3. The electric kettle according to claim 2, **characterised in that** the at least one spring element (11) is pre-tensioned such that it pulls the lower area (3f) of the water container (3) and the lower area (2g) of the jacket (2) against each other.

4. Electric kettle according to claim 3, **characterised in that** the kettle (1) has a fastening means (10) resting against the edge (2g) of the opening (2b) at the bottom of the jacket (2), via which the at least one spring element (11) pulls the lower area (2g) of the jacket (2) onto the lower area (3f) of the water container (3).

5. Electric kettle according to claim 4, **characterised in that** the fastening means (10) is embodied in the shape of a ring.

6. Electric kettle according to one of claims 3 to 5, **characterised in that** the at least one spring element is a leaf spring (11).

7. Electric kettle according to claim 6, **characterised in that** the leaf spring (11) is embodied in a T shape and comprises a spring bracket (11a) and a spring tongue (11b).

8. Electric kettle according to claim 7, **characterised in that** the spring bracket (11b) interacts with a cutout (10b) of the attachment means (10).

9. Electric kettle according to one of claims 7 to 9, **characterised in that** the spring tongue (11b) of the leaf spring (11) interacts with a ring (3f) moulded onto the water container (3).

10. Electric kettle according to one of claims 1 to 9, **characterised in that** the electric kettle (1) has an electric plug-in coupling (4a, 4b) and a base (5) via which a heating element (3e) of the electric kettle (1) is supplied with electrical energy during operation and a jug comprising the water container (3) and the jacket (2) enclosing it can be lifted off the base.

11. Electric kettle according to claim 10, **characterised in that** a panel (12) covers the opening (2b) at the bottom of the jacket (2), the panel (12) has a fixed connection to the water container (3) and the jug with the cover (12) sits on the base (5) during operation of the kettle (1).

12. Electric kettle according to one of claims 1 to 11, **characterised in that** in its lower area the jacket (2) is pulled down far enough over the water container (3) so that, even in the expanded state of the water container caused by the heated water, it covers the water container (3).

13. The electric kettle according to one of claims 1 to 12, **characterised in that** the water container (3) is rigidly supported in its upper area (3c) by the upper area (2f) of the jacket (2).

14. Electric kettle according to claim 13, **characterised in that** the water container (3) is rigidly supported in its upper area by at least one further component (6, 7, 9) in the upper area (2f) of the jacket (2).

15. Electric kettle according to one of claims 1 to 14, **characterised in that** the jacket (2) is embodied in a conical shape in its upper area (2f).

16. Electric kettle according to claim 15, **characterised in that** a spout (3c) for pouring out water is moulded onto the water container (3) and the jacket (2) has a cutout (2c) corresponding to the spout (2c) in the conical area (2f).

17. Electric kettle according to one of claims 15 to 17, **characterised in that** the at least one component with which the water container (3) is rigidly supported in its upper area on the upper area (2f) of the jacket (2) is a spout panel (7).

18. Electric kettle according to one of claims 1 to 17, **characterised in that** the kettle (1) includes a handle (6) which is latched onto the water container (3).

19. Electric kettle according to claim 18, **characterised in that** the jacket (2) has a cutout (2d) corresponding to the handle (6) in its conical area (2f).

20. Electric kettle according to claim 19, **characterised in that** the handle (6) presses against the edge of the cutout (2d) of the jacket (2) provided for the handle (6).

21. Electric kettle according to one of claims 14 to 20, **characterised in that** the at least one component with which the water container is rigidly supported in its upper area on the upper area (2f) of the jacket (2), is a panel (9) which covers a gap which is delimited by the edge (3f) of the opening (3b) at the top of the water container (3) and the edge of the opening (2a) at the top of the jacket (2).

## Revendications

1. Bouilloire électrique présentant un réservoir à eau (3) et une enveloppe (2) entourant le réservoir à eau (3), munie d'une ouverture inférieure (2b), **caractérisée en ce que** le réservoir à eau (3), sur sa partie inférieure (3f), est logé de manière déplaçable relativement à l'axe longitudinal du réservoir à eau (3) par rapport à l'enveloppe (2).

2. Bouilloire électrique selon la revendication 1, **caractérisée en ce que** la bouilloire est logée de manière déplaçable à l'aide d'au moins un élément à ressort (11).

3. Bouilloire électrique selon la revendication 2, **caractérisée en ce que** l'au moins un élément à ressort (11) est précontraint de manière à ce qu'il tire l'une contre l'autre la partie inférieure (3f) du réservoir à eau (3) et la partie inférieure (2g) de l'enveloppe (2).

4. Bouilloire électrique selon la revendication 3, **caractérisée en ce que** la bouilloire (1) comprend un moyen de fixation (10) adjacent au bord (2g) de l'ouverture inférieure (2b) de l'enveloppe (2), par l'intermédiaire duquel moyen de fixation l'au moins un élément à ressort (11) tire la partie inférieure (2g) de l'enveloppe (2) sur la partie inférieure (3f) du réservoir à eau (3).

5. Bouilloire électrique selon la revendication 4, **caractérisée en ce que** le moyen de fixation (10) est réalisé de manière annulaire.

6. Bouilloire électrique selon l'une quelconque des revendications 3 à 5, **caractérisée en ce que** l'au moins un élément à ressort (11) est un ressort à lames (11).

7. Bouilloire électrique selon la revendication 6, **caractérisée en ce que** le ressort à lames (11) est réalisé en forme de T et comprend un étrier de ressort (11a) et une languette de ressort (11b).

8. Bouilloire électrique selon la revendication 7, **caractérisée en ce que** l'étrier de ressort (11b) coopère avec un évidement (10b) du moyen de fixation (10).

9. Bouilloire électrique selon l'une quelconque des revendications 7 à 9, **caractérisée en ce que** la languette de ressort (11 b) du ressort à lames (11) coopère avec une bague (3f) formée sur le réservoir à eau (3).

10. Bouilloire électrique selon l'une quelconque des revendications 1 à 9, **caractérisée en ce que** la bouilloire électrique (1) comprend un raccord de connexion électrique (4a, 4b) et un socle (5), par l'intermédiaire duquel un chauffage (3e) de la bouilloire électrique (1) est alimenté en énergie électrique pendant le fonctionnement et **en ce qu'**un pot, comprenant le réservoir à eau (3) et l'enveloppe (2) entourant celui-ci, peut être retiré du socle.

11. Bouilloire électrique selon la revendication 10, **caractérisée en ce qu'**un bandeau (12) recouvre l'ouverture inférieure (2b) de l'enveloppe (2), le bandeau (12) étant relié de manière fixe au réservoir à eau (3) et le pot, avec le bandeau (12), étant posé sur le socle pendant le fonctionnement de la bouilloire (1).

12. Bouilloire électrique selon l'une quelconque des revendications 1 à 11, **caractérisée en ce que** l'enveloppe (2), dans la partie inférieure, est étirée de telle manière vers le bas au-dessus du réservoir à eau (3) qu'elle recouvre le réservoir à eau (3) même à l'état dilaté, provoqué en raison de l'eau échauffée.

13. Bouilloire électrique selon l'une quelconque des revendications 1 à 12, **caractérisée en ce que** le réservoir à eau (3), dans sa partie supérieure (3c), est logé de manière fixe avec la partie supérieure (2f) de l'enveloppe (2).

14. Bouilloire électrique selon la revendication 13, **caractérisée en ce que** le réservoir à eau (3), dans sa partie supérieure, est logé de manière fixe avec la partie supérieure (2f) de l'enveloppe (2) à l'aide d'au moins un composant supplémentaire (6, 7, 9).

15. Bouilloire électrique selon l'une quelconque des revendications 1 à 14, **caractérisée en ce que** l'enveloppe (2) est réalisée de manière conique dans sa partie supérieure (2f).

16. Bouilloire électrique selon la revendication 15, **caractérisée en ce qu'**un bec (3c) est formé sur la bouilloire (3) pour verser de l'eau et **en ce que** l'enveloppe (2) présente dans la partie conique (2f) un évidement (2c) correspondant au bec (2c).

17. Bouilloire électrique selon l'une quelconque des revendications 15 à 17, **caractérisée en ce que** l'au moins un composant, à l'aide duquel le réservoir à eau (3), dans sa partie supérieure, est logé de manière fixe sur la partie supérieure (2f) de l'enveloppe (2), est un protège-bec (7).

18. Bouilloire électrique selon l'une quelconque des revendications 1 à 17, **caractérisée en ce que** la bouilloire (1) comprend une poignée (6) qui est enclenchée avec le réservoir à eau (3).

19. Bouilloire électrique selon la revendication 18, **caractérisée en ce que** l'enveloppe (2) présente dans sa partie conique (2f) un évidement (2d) correspondant à la poignée (6).

20. Bouilloire électrique selon la revendication 19, **caractérisée en ce que** la poignée (6) appuie contre le bord de l'évidement (2d) de l'enveloppe (2), ménagé pour la poignée (6).

21. Bouilloire électrique selon l'une quelconque des revendications 14 à 20, **caractérisée en ce que** l'au moins un composant, à l'aide duquel le réservoir à eau (3), dans sa partie supérieure, est logé de manière fixe sur la partie supérieure (2f) de l'enveloppe (2), est un cache (9) qui recouvre une fente délimitée par le bord (3f) de l'ouverture supérieure (3b) du réservoir à eau (3) et par le bord de l'ouverture supérieure (2a) de l'enveloppe (2).
